# EUROPÄISCHE PATENTSCHRIFT

(11) **EP 2 915 961 B1**
(45) Veröffentlichungstag und Bekanntmachung des Hinweises auf die Patenterteilung: **03.05.2017**
(21) Anmeldenummer: 15157111.4
(22) Anmeldetag: 02.03.2015
(51) Int. Cl.: F01D 21/00, F01D 25/18, F01M 11/12, F02C 7/06, F16N 19/00

(54) **BAUEINHEIT ZUR ANORDNUNG AN EINEM HYDRAULIKFLUIDTANK EINES STRAHLTRIEBWERKS**
Unit for assembly on a hydraulic fluid tank of a jet engine
Composant destiné à être monté sur un réservoir de fluide hydraulique d'un moteur à réaction

(30) Priorität: 03.03.2014 DE 102014102776
(43) Veröffentlichungstag der Anmeldung: 09.09.2015
(73) Patentinhaber: Rolls-Royce Deutschland Ltd & Co KG, 15827 Blankenfelde-Mahlow (DE)
(72) Erfinder: Venter, Gideon, 14165 Berlin (DE)
(74) Vertreter: Schmidt, Martin Michael

(56) Entgegenhaltungen:
- US-A- 4 440 022
- US-A1- 2013 068 562

## Beschreibung

Die Erfindung betrifft eine Baueinheit zur Anordnung an einem Hydraulikfluidtank eines Strahltriebwerks mit einer Sichteinrichtung und einer Sensoreinrichtung gemäß der im Patentanspruch 1 näher definierten Art.

Aus der Praxis sind Strahltriebwerke hinlänglich bekannt, bei denen zur Ölversorgung insbesondere einer Hilfsgerätegetriebeeinrichtung und Triebwerkslagern ein einen Öltank aufweisender Ölkreislauf vorgesehen ist. Der mit dem Strahltriebwerk verbundene Öltank ist dabei mit einem Schauglas ausgeführt, über das beispielsweise nach einem Öffnen einer Triebwerksverkleidung durch eine visuelle Überprüfung ein Ölstand von in dem Öltank befindlichem Öl ermittelt werden kann. Bekannte Öltanks sind weiterhin mit einer in einem Innenraum des Öltanks angeordneten Sensoreinrichtung bzw. elektrischen Füllstandsmesseinrichtung zur Ermittlung des Ölstands verbunden, über die ein ermittelter Ölstand beispielsweise in einem Cockpit eines mit dem Strahltriebwerk ausgeführten Flugzeugs angezeigt werden kann.

Durch eine zueinander versetzte Anordnung des Schauglases und der Sensoreinrichtung in dem Öltank weichen die jeweils ermittelten Messergebnisse bei bekannten Ausführungen gegebenenfalls in unerwünschtem Umfang voneinander ab, wenn der Öltank gegenüber einer Horizontalen geneigt ist. Eine derartige Abweichung der Messergebnisse kann beispielsweise durch eine geneigte Anordnung des Öltanks an dem Strahltriebwerk und/oder durch eine Neigung eines Untergrunds auftreten, auf dem sich ein Flugzeug mit einem den Öltank umfassenden Strahltriebwerk befindet. Strenge Toleranzanforderungen, die hinsichtlich der über das Schauglas und die Sensoreinrichtung ermittelten Messergebnisse zu erfüllen sind, können unter Umständen nicht eingehalten werden.

Weiterhin ist eine Montage des Schauglases und der Sensoreinrichtung an den Öltank und eine Kalibrierung sowohl des Schauglases als auch der Sensoreinrichtung nachteilhafterweise aufwändig.

Aus der US 2013/0068562 A1 ist ein Tank eines Schmierölkreises eines Triebwerks bekannt, wobei der Tank mit einem Fenster zur visuellen Ermittlung eines Ölstands in dem Tank ausgeführt ist. Weiter ist ein Ölstandsdetektor vorgesehen, mit dem ebenfalls ein Ölstand in dem Tank ermittelbar ist.

Weiterhin ist aus der US 4,440,022 A ein Ölstandsdetektor eines Tanks eines Gasturbinentriebwerks bekannt, der auf einer äußeren Seite eines in einer Wand des Tanks ausgebildeten Glasfensters angeordnet ist.

Der vorliegenden Erfindung liegt die Aufgabe zugrunde, eine Vorrichtung zu schaffen, mit der Messwertabweichungen zwischen einer Sensoreinrichtung und einer Sichteinrichtung verringert sind.

Erfindungsgemäß wird diese Aufgabe mit einer Baueinheit mit den Merkmalen des Patentanspruches 1 gelöst.

Die erfindungsgemäße Baueinheit zur Anordnung an einem Hydraulikfluidtank eines Strahltriebwerks ist mit einer Sichteinrichtung und einer in an dem Hydraulikfluidtank montierten Zustand der Baueinheit in einem Innenraum des Hydraulikfluidtanks angeordneten Sensoreinrichtung ausgeführt, über die bei an dem Hydraulikfluidtank angeordneter Baueinheit unabhängig voneinander ein Füllstand eines in dem Hydraulikfluidtank vorhandenen Hydraulikfluids ermittelbar ist, wobei zur Festlegung der Baueinheit an dem Hydraulikfluidtank eine Befestigungseinrichtung vorgesehen ist.

Die erfindungsgemäße Baueinheit hat den Vorteil, dass die insbesondere als Schauglas ausgeführte Sichteinrichtung und die Sensoreinrichtung bzw. elektrische Füllstandsmesseinrichtung durch die gemeinsame Anordnung innerhalb einer Baueinheit gegenüber bekannten Ausführungen, bei denen das Schauglas und die Sensoreinrichtung separat einem Hydraulikfluidtank zugeordnet sind, eine große örtliche Nähe zueinander aufweisen. Auch bei einer gegenüber einer horizontalen Ausrichtung geneigten Position eines mit der erfindungsgemäßen Baueinheit versehenen Hydraulikfluidtanks weichen über die Sichteinrichtung und über die in einem Innenraum eines Hydraulikfluidtanks anordenbare Sensoreinrichtung ermittelten Füllstände eines Hydraulikfluids in einem Hydraulikfluidtank somit nicht oder nur geringfügig voneinander ab, so dass auf vorteilhafte Weise enge Toleranzen hinsichtlich der jeweils ermittelten Messwerte eingehalten werden können.

Ein weiterer Vorteil der erfindungsgemäß ausgeführten Baueinheit besteht darin, dass die Sichteinrichtung und die Sensoreinrichtung über die einzige Befestigungseinrichtung gemeinsam in einem einzigen Arbeitsschritt an einem Hydraulikfluidtank anordenbar sind. Eine Montagezeit und Montagekosten sind somit gegenüber einer bekannten Ausführung reduziert, bei der die Sichteinrichtung und die Sensoreinrichtung separat an einem Hydraulikfluidtank angeordnet werden müssen. Zudem kann ein Hydraulikfluidtank, mit dem die Baueinheit in Wirkverbindung gebracht werden soll, gegenüber bekannten Lösungen vereinfacht ausgeführt werden, da lediglich eine einzige Schnittstelle zur Anordnung der Sichteinrichtung und der Sensoreinrichtung zur Verfügung gestellt werden muss. Entsprechend ist ein derartiger Hydraulikfluidtank leichter und günstiger als bekannte Hydraulikfluidtanks ausführbar.

Durch die vormontierbare Baueinheit kann vorteilhafterweise bereits vor einer Anordnung der Baueinheit an dem Hydraulikfluidtank eine Kalibrierung der Sichteinrichtung und der Sensoreinrichtung vorgenommen werden, so dass eine Kalibrierung der Sichteinrichtung und der Sensoreinrichtung nach einer Montage der Baueinheit an einem Hydraulikfluidtank entfallen kann oder vereinfacht durchführbar ist. Zudem können bei bekannten Ausführungen aufgrund von Herstellungstoleranzen auftretende Messungenauigkeiten zwischen der Sichteinrichtung und der Sensoreinrichtung mit der erfindungsgemäßen Baueinheit größtenteils beseitigt werden.

Bei einer vorteilhaften Ausführung der erfindungsgemäßen Baueinheit ist es vorgesehen, dass die Sensoreinrichtung zur Ermittlung des Füllstands des Hydraulikfluids als induktiv, kapazitiv oder magnetisch messende Sensoreinrichtung ausgeführt ist. Die Sensoreinrichtung kann aber im Prinzip beliebig ausgeführt sein, soweit damit ein Füllstand eines in einem Hydraulikfluidtank vorhandenen Hydraulikfluids ermittelbar ist.

Die Sensoreinrichtung der erfindungsgemäßen Baueinheit kann sowohl gelenkig als auch starr mit der Befestigungseinrichtung verbunden sein, so dass die Sensoreinrichtung je nach vorliegendem Anwendungsfall und gewünschtem Funktionsprinzip auf einfache Weise mit der Baueinheit an einem Hydraulikfluidtank angeordnet werden und eine gewünschte Position bei an einem Hydraulikfluidtank angeordneter Baueinheit einnehmen kann.

Wenn eine Längsachse der beispielsweise zylinder- oder röhrenförmig ausgeführten Sensoreinrichtung einen Winkel, vorzugsweise einen spitzen Winkel, mit einer bei an einem Hydraulikfluidtank angeordneter Baueinheit einem Innenraum des Hydraulikfluidtanks abgewandten Außenfläche oder einer dem Innenraum des Hydraulikfluidtanks zugewandten Innenfläche der Befestigungseinrichtung einschließt, kann die Sensoreinrichtung bei entsprechender Auslegung des Winkels während einer Montage der Baueinheit an einem Hydraulikfluidtank auf einfache Weise durch eine Ausnehmung des Hydraulikfluidtanks geführt werden und zusätzlich an räumliche Gegebenheiten im Bereich des Hydraulikfluidtanks angepasst werden. Zudem kann hierdurch auf einfache Weise eine Zugänglichkeit des Schauglases in gewünschtem Umfang sichergestellt werden.

Bei einer vorteilhaften Ausführung einer erfindungsgemäßen Baueinheit ist es vorgesehen, dass die Sichteinrichtung ein transparentes Element aufweist, über das bei mit einem Hydraulikfluidtank verbundener Baueinheit ein Füllstand eines in dem Hydraulikfluidtank befindlichen Hydraulikfluids insbesondere von einer Bedienperson visuell direkt ermittelbar ist. Eine als Schauglas ausgeführte Sichteinrichtung weist hierzu insbesondere zwei zueinander versetzte, bei mit einem Hydraulikfluidtank verbundener Baueinheit einem Innenraum des Hydraulikfluidtanks zugewandte Öffnungen auf. Die Öffnungen sind im Bereich der Befestigungseinrichtung über eine insbesondere rohrförmige Ausnehmung miteinander verbunden, so dass Hydraulikfluid von einer Öffnung zu der anderen Öffnung strömen kann. In mit einem Hydraulikfluidtank verbundenem Zustand der Baueinheit kann ein Hydraulikfluid nach dem Prinzip miteinander kommunizierender Gefäße durch die rohrförmige Ausnehmung strömen. Über das transparente bzw. durchsichtige Element, das insbesondere mit Kunststoff oder Glas ausgebildet ist und auf einer einem Innenraum des Hydraulikfluidtanks abgewandten Seite der rohrförmigen Ausnehmung angeordnet ist, ist ein Füllstand des Hydraulikfluids auf einfache Art und Weise ermittelbar. Alternativ hierzu kann die Sichteinrichtung auch als sogenanntes Ölauge ausgeführt sein, über das insbesondere eine Bedienperson bei mit einem Hydraulikfluidtank verbundener Baueinheit direkt in einen Innenraum eines Hydraulikfluidtanks blicken und einen Füllstand des Hydraulikfluids ermitteln kann.

Bei einer einfachen Ausführung der erfindungsgemäßen Baueinheit ist die Befestigungseinrichtung als Flansch ausgeführt.

Die Sichteinrichtung und/oder die Befestigungseinrichtung einer vorteilhaften Ausführung der erfindungsgemäßen Baueinheit besteht bzw. bestehen in Abhängigkeit des jeweils vorliegenden Anwendungsfalles zumindest bereichsweise aus einem feuerfesten Material. Ist die Sensoreinrichtung im Gebrauchszustand in einem Innenraum des Hydraulikfluidtanks angeordnet und sind an diese daher keine besonderen Anforderungen bezüglich Hitzebeständigkeit zu stellen, ist die Sensoreinrichtung entsprechend kostengünstig ohne ein solches feuerfestes Material ausführbar.

Sowohl die in den Patentansprüchen angegebenen Merkmale als auch die in den nachfolgenden Ausführungsbeispielen der erfindungsgemäßen Baueinheit angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung der, sondern weisen im Wesentlichen lediglich bespielhaften Charakter auf.

Weitere Vorteile und vorteilhafte Ausführungsformen der erfindungsgemäßen Baueinheit ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine vereinfachte Darstellung eines Öltanks eines Strahltriebwerks in Alleinstellung, wobei der Öltank mit einer erfindungsgemäßen Ausführungsform der Baueinheit ausgebildet ist; und
- Fig. 2 bis 5: vereinfachte Ansichten einer weiteren Ausführungsform der Baueinheit.

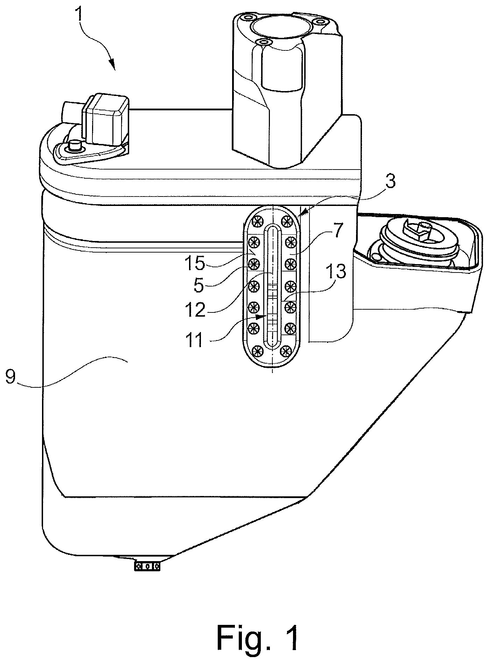

Fig. 1 zeigt einen als Öltank 1 ausgeführter Hydraulikfluidtank in Alleinstellung, der zur Aufnahme von Hydraulikfluid, insbesondere Öl, ausgeführt ist. Der Öltank 1 ist zur Anordnung an einem Strahltriebwerk insbesondere im Bereich einer in radialer Richtung des Strahltriebwerks außerhalb eines Nebenstromkanals des Strahltriebwerks angeordneten Hilfsgerätegetriebeeinrichtung vorgesehen.

Dabei ist der Öltank 1 im Bereich einer Ausnehmung 5 des Öltanks 1 mit einer Baueinheit 3 verbunden. Die Baueinheit 3 umfasst eine als Flansch 7 ausgeführte Befestigungseinrichtung, in deren Bereich die Baueinheit 3 über mehrere Bolzen auf einfache Weise an einer Wand 9 des Öltanks 1 befestigt ist. Des Weiteren weist die Baueinheit 3 eine als Schauglas 11 ausgeführte Sichteinrichtung auf. Eine Bedienperson kann im Bereich eines Schauglases 11 einen Füllstand eines in einem Innenraum des Öltanks 1 vorhandenen Hydraulikfluids bzw. Öls ablesen. Das Schauglas 11 ist hierzu mit einem transparenten Element 12 ausgeführt und zudem aus feuerfestem Material hergestellt.

Um den Füllstand des Öltanks 1 besonders einfach ermitteln zu können, sind im Bereich einer dem Innenraum des Öltanks 1 abgewandten Fläche 15 des Flansches 7 neben dem transparenten Element 12 des Schauglases 11 Markierungen 13 vorgesehen, über die ein Füllstand des Öls einfach von einer Bedienperson ablesbar ist.

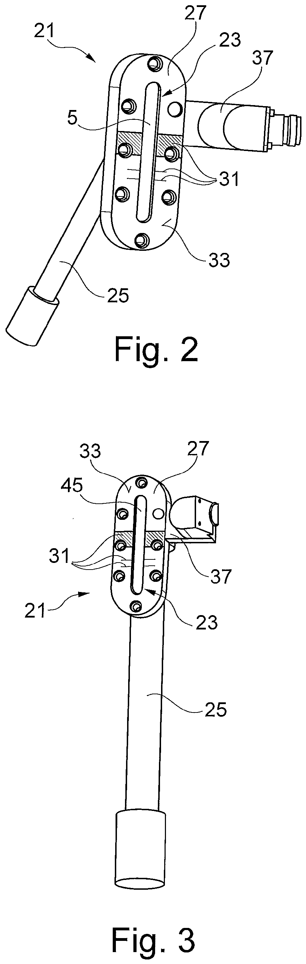

In Fig. 2 bis Fig. 5 ist jeweils eine im Wesentlichen vergleichbar zu der Baueinheit 3 ausgeführte und vereinfacht dargestellte Baueinheit 21 in Alleinstellung gezeigt, die ebenfalls eine als Flansch 27 ausgeführte Befestigungseinrichtung aufweist.

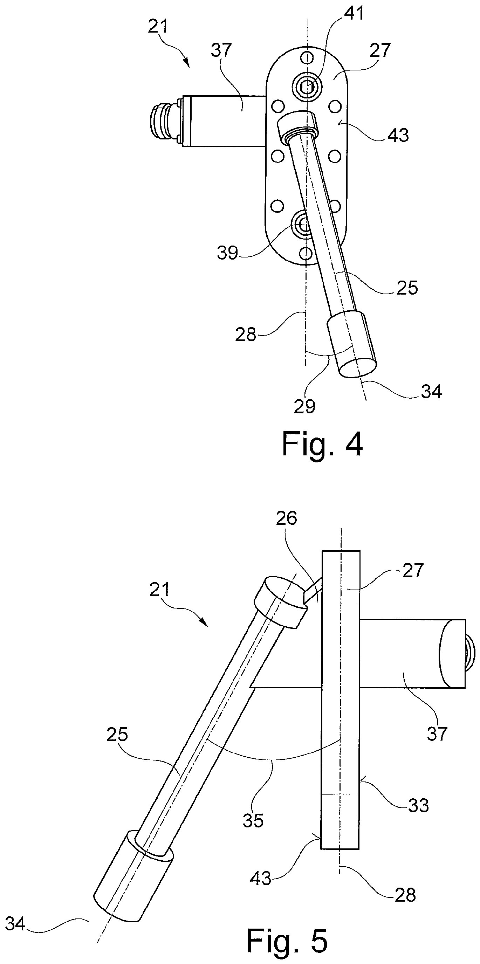

Die Baueinheit 21 ist wiederum mit einer als Schauglas 23 ausgeführten Sichteinrichtung mit auf einer Außenfläche 33 des Flansches 27 vorgesehenen Markierungen 31 ausgebildet, in deren Bereich ein Füllstand des Öltanks 1 bestimmbar ist. Hierzu sind auf einer einem Innenraum des Öltanks 1 zugewandten und in Fig. 4 gezeigten Innenfläche 43 des Flansches 27 zwei hier im Wesentlichen in vertikaler Richtung zueinander beabstandete Öffnungen 39, 41 vorgesehen. Die Öffnungen 39, 41 sind im Bereich des Flansches 27 über eine nicht näher gezeigte rohrförmige Ausnehmung miteinander verbunden, womit Öl von einer Öffnung 39 bzw. 41 zu der anderen Öffnung 41 bzw. 39 fließen kann. Auf einer dem Innenraum des Öltanks 1 abgewandten Seite der Baueinheit 21 weist das Schauglas 23 ein beispielsweise mit Kunststoff oder Glas ausgeführtes transparentes Element 45 auf, über das gegebenenfalls in der Ausnehmung vorhandenes Öl von einer Bedienperson zur Bestimmung eines Füllstandes des Öls in dem Öltank 1 visuell erfasst werden kann.

Neben dem Schauglas 23 weist die Baueinheit 21 eine Sensor- bzw. elektrische Messeinrichtung 25 auf, die beispielsweise mit einem Schwimmer oder dergleichen ausgebildet ist und zur vorzugsweise automatisierten Messung des Füllstandes des Öltanks 1 vorgesehen ist. Über die hier zumindest bereichsweise rohr- bzw. zylinderförmig ausgeführte Sensoreinrichtung 25, beispielsweise ein sogenannter Transducer, ist der Füllstand über verschiedene Messprinzipien, beispielsweise einem induktiven, kapazitiven oder magnetischen Messprinzip, bestimmbar. Die Sensoreinrichtung 25 ist vorliegend starr über ein Verbindungsblech 26 mit der als Flansch 27 ausgeführten Befestigungseinrichtung verbunden, so dass das Schauglas 23 über den Flansch 27 gemeinsam mit der Sensoreinrichtung 25 in einem einzigen Arbeitsschritt an dem Öltank 1 festlegbar ist.

Eine Mittelachse 34 der rohrförmigen Sensoreinrichtung 25 schließt vorliegend einen spitzen Winkel mit einer dem Innenraum des Öltanks 1 zugewandten Innenfläche 43 bzw. der parallel hierzu verlaufenden und dem Innenraum des Öltanks 1 abgewandten Außenfläche 33 des Flansches 27 und somit auch mit einer Längsmittelachse 28 des Schauglases 23 ein. Gemäß Fig. 4, die eine Rückansicht des Flansches 27 zeigt, schließt die Mittelachse 34 der rohrförmigen Sensoreinrichtung 25 auch mit den Flächen 33, 43 bzw. mit der im Wesentlichen vertikal verlaufenden Längsachse 28 des Schauglases 23 einen spitzen Winkel 29 ein. Zudem geht aus der in Fig. 5 gezeigten Seitenansicht des Flansches 27 hervor, dass die Mittelachse 34 der Sensoreinrichtung 25 auch gegenüber der Längsachse 28 des Schauglases 23 geneigt ist und mit der Längsachse 28 des Schauglases 23 einen spitzen Winkel 35 einschließt.

Das Schauglas 23 ist gegenüber dem Flansch 27 jeweils derart geneigt anordenbar, dass die Sensoreinrichtung 25 auf einfache Weise durch die Ausnehmung 5 des Öltanks 1 in den Innenraum des Öltanks 1 eingeführt werden kann und in montiertem Zustand jeweils an den im Öltank 1 zur Verfügung stehenden Bauraum angepasst ausgeführt und positionierbar ist.

Die Baueinheit 21 umfasst weiterhin einen fest mit dem Flansch 27 verbundenen Anschlussstutzen 37 auf, von dem aus im Bereich der Sensoreinrichtung 25 ermittelte Messwerte über elektrische Leitungen beispielsweise einem Piloten eines mit dem Strahltriebwerk ausgeführten Flugzeugs zur Verfügung stellbar sind.

Das Schauglas 23 und die Sensoreinrichtung 25 sind bei der erfindungsgemäßen Baueinheit 21 unmittelbar aneinander angrenzend angeordnet, so dass Messwertabweichungen zwischen dem Schauglas 23 und der Sensoreinrichtung 25 beispielsweise bei einer geneigten Anordnung des Öltanks 1 auf einfache Weise vermieden bzw. stark reduziert werden können. Durch die Vormontierbarkeit der Baueinheit 21 kann zudem in vorteilhafter Weise bereits vor der Montage der Baueinheit 21 an den Öltank 1 eine Kalibrierung der Baueinheit 21 vorgenommen werden, womit eine einfache und schnelle Montage der Baueinheit 21 am Öltank 1 ermöglicht wird.

### Bezugszeichenliste

- 1: Hydraulikfluidtank; Öltank
- 3: Baueinheit
- 5: Ausnehmung des Öltanks
- 7: Befestigungseinrichtung; Flansch
- 9: Wand des Öltanks
- 11: Sichteinrichtung; Schauglas
- 12: transparentes Element
- 13: Markierungen
- 15: Fläche des Flansches
- 21: Baueinheit
- 23: Sichteinrichtung; Schauglas
- 25: Sensoreinrichtung
- 26: Verbindungsblech
- 27: Befestigungseinrichtung; Flansch
- 28: Längsachse des Schauglases
- 29: Winkel
- 31: Markierungen
- 33: Außenfläche des Flansches
- 34: Mittelachse der Sensoreinrichtung
- 35: Winkel
- 37: Anschlussstutzen
- 39, 41: Öffnung des Flansches
- 43: Innenfläche des Flansches
- 45: transparentes Element des Schauglases

## Patentansprüche

1. Baueinheit (3, 21) zur Anordnung an einem Hydraulikfluidtank (1) eines Strahltriebwerks mit einer Sichteinrichtung (11, 23) und einer Sensoreinrichtung (25), die bei an dem Hydraulikfluidtank (1) montierter Baueinheit (3, 21) in einem Innenraum des Hydraulikfluidtanks (1) angeordnet ist, wobei über die Sichteinrichtung (11, 23) und die Sensoreinrichtung (25) bei an dem Hydraulikfluidtank (1) angeordneter Baueinheit (3, 21) unabhängig voneinander ein Füllstand eines in dem Hydraulikfluidtank (1) befindlichen Hydraulikfluids ermittelbar ist, und wobei zur Festlegung der Baueinheit (3, 21) an dem Hydraulikfluidtank (1) eine Befestigungseinrichtung (7, 27) vorgesehen ist.

2. Baueinheit nach Anspruch 1, **dadurch gekennzeichnet, dass** die Sensoreinrichtung (25) zur Ermittlung des Füllstands des Hydraulikfluids als induktiv, kapazitiv oder magnetisch messende Sensoreinrichtung ausgeführt ist.

3. Baueinheit nach einem der Ansprüche 1 oder 2, **dadurch gekennzeichnet, dass** die Sensoreinrichtung (25) gelenkig mit der Befestigungseinrichtung (7, 27) verbunden ist.

4. Baueinheit nach einem der Ansprüche 1 oder 2, **dadurch gekennzeichnet, dass** die Sensoreinrichtung (25) starr mit der Befestigungseinrichtung (7, 27) verbunden ist.

5. Baueinheit nach einem der Ansprüche 1 bis 4, **dadurch gekennzeichnet, dass** eine Längsachse (34) der Sensoreinrichtung (25) bei an einem Hydraulikfluidtank angeordneter Baueinheit (3, 21) einen Winkel (29, 35) mit einer einem Innenraum des Hydraulikfluidtanks (1) abgewandten Außenfläche (15, 33) oder einer dem Innenraum des Hydraulikfluidtanks (1) zugewandten Innenfläche (43) der Befestigungseinrichtung (7, 27) einschließt.

6. Baueinheit nach einem der Ansprüche 1 bis 5, **dadurch gekennzeichnet, dass** die Sichteinrichtung (11, 23) ein transparentes Element (12, 45) aufweist, über das bei mit einem Hydraulikfluidtank (1) verbundener Baueinheit (3, 21) ein Füllstand eines in dem Hydraulikfluidtank (1) befindlichen Hydraulikfluids visuell direkt ermittelbar ist.

7. Baueinheit nach einem der Ansprüche 1 bis 6, **dadurch gekennzeichnet, dass** die Befestigungseinrichtung (7, 27) als Flansch ausgeführt ist.

8. Baueinheit nach einem der Ansprüche 1 bis 7, **dadurch gekennzeichnet, dass** die Sichteinrichtung (11, 23) mit feuerfestem Material ausgeführt ist.

## Claims

1. Structural unit (3, 21) for arrangement on a hydraulic fluid tank (1) of a jet engine having a vision device (11, 23) and a sensor device (25), which is arranged in an interior of the hydraulic fluid tank (1) when the structural unit (3, 21) is mounted on the hydraulic fluid tank (1), where a level of a hydraulic fluid present in the hydraulic fluid tank (1) can be determined using the vision device (11, 23) and the sensor device (25) independently of one another when the structural unit (3, 21) is arranged on the hydraulic fluid tank (1), and where a fastening device (7, 27) is provided to fix the structural unit (3, 21) on the hydraulic fluid tank (1).

2. Structural unit in accordance with Claim 1, **characterized in that** the sensor device (25) for determining the level of the hydraulic fluid is designed as an inductively, capacitively or magnetically measuring sensor device.

3. Structural unit in accordance with one of the Claims 1 or 2, **characterized in that** the sensor device (25) is connected articulately to the fastening device (7, 27).

4. Structural unit in accordance with one of the Claims 1 or 2, **characterized in that** the sensor device (25) is connected rigidly to the fastening device (7, 27).

5. Structural unit in accordance with one of the Claims 1 to 4, **characterized in that** a longitudinal axis (34) of the sensor device (25) includes an angle (29, 35) with an outer surface (15, 33) facing away from an interior of the hydraulic fluid tank (1) or with an inner surface (43) of the fastening device (7, 27) facing the interior of the hydraulic fluid tank (1) when the structural unit (3, 21) is arranged on a hydraulic fluid tank.

6. Structural unit in accordance with one of the Claims 1 to 5, **characterized in that** the vision device (11, 23) has a transparent element (12, 45), using which a level of a hydraulic fluid present in the hydraulic fluid tank (1) can be directly visually determined when the structural unit (3, 21) is connected to a hydraulic fluid tank (1).

7. Structural unit in accordance with one of the Claims 1 to 6, **characterized in that** the fastening device (7, 27) is designed as a flange.

8. Structural unit in accordance with one of the Claims 1 to 7, **characterized in that** the vision device (11, 23) is made of fire-resistant material.

## Revendications

1. Unité structurale (3, 21) destinée à être placée sur un réservoir de liquide hydraulique (1) d'un réacteur, comprenant un dispositif de visualisation (11, 23) et un dispositif capteur (25) qui est disposé dans un espace intérieur du réservoir de liquide hydraulique (1) lorsque l'unité structurale (3, 21) est montée sur le réservoir de liquide hydraulique (1), sachant que lorsque l'unité structurale (3, 21) est placée sur le réservoir de liquide hydraulique (1), le dispositif de visualisation (11, 23) et le dispositif capteur (25) permettent de déterminer indépendamment l'un de l'autre un niveau d'un liquide hydraulique se trouvant dans le réservoir de liquide hydraulique (1), et qu'est prévu un dispositif de fixation (7, 27) pour fixer l'unité structurale (3, 21) au réservoir de liquide hydraulique (1).

2. Unité structurale selon la revendication n° 1, **caractérisée en ce que** le dispositif capteur (25) pour déterminer le niveau du liquide hydraulique est conçu en tant que dispositif capteur mesurant de manière inductive, capacitive ou magnétique.

3. Unité structurale selon une des revendications n° 1 ou n° 2, **caractérisée en ce que** le dispositif capteur (25) est relié de manière articulée au dispositif de fixation (7, 27).

4. Unité structurale selon une des revendications n° 1 ou n° 2, **caractérisée en ce que** le dispositif capteur (25) est relié de manière rigide au dispositif de fixation (7, 27).

5. Unité structurale selon une des revendications n° 1 à n° 4, **caractérisée en ce que** lorsque l'unité structurale (3, 21) est placée sur un réservoir de liquide hydraulique, un axe longitudinal (34) du dispositif capteur (25) fait un angle (29, 35) avec une surface extérieure (15, 33) opposée à un espace intérieur du réservoir de liquide hydraulique (1) ou avec une surface intérieure (43) du dispositif de fixation (7, 27) orientée vers l'espace intérieur du réservoir de liquide hydraulique (1).

6. Unité structurale selon une des revendications n° 1 à n° 5, **caractérisée en ce que** le dispositif de visualisation (11, 23) présente un élément transparent (12, 45) au moyen duquel, lorsque l'unité structurale (3, 21) est reliée à un réservoir de liquide hydraulique (1), un niveau d'un liquide hydraulique se trouvant dans le réservoir de liquide hydraulique (1) peut être directement déterminé visuellement.

7. Unité structurale selon une des revendications n° 1 à n° 6, **caractérisée en ce que** le dispositif de fixation (7, 27) est conçu en tant que bride.

8. Unité structurale selon une des revendications n° 1 à n° 7, **caractérisée en ce que** le dispositif de visualisation (11, 23) est fabriqué de matériau réfractaire.
